# EUROPEAN PATENT APPLICATION

(11) **EP 4 510 245 A1**
(43) Date of publication of application: **19.02.2025**
(21) Application number: 22939520.7
(22) Date of filing: 27.05.2022
(51) Int. Cl.: H01M 4/64, H01M 4/1395, H01M 4/134, H01M 4/66

(54) **COMPOSITE CURRENT COLLECTOR AND PREPARATION METHOD THEREFOR, AND ELECTRODE PLATE AND SECONDARY BATTERY**

(30) Priority: 25.04.2022 CN 202210441005
(71) Applicant: JIANGYIN NANOPORE INNOVATIVE MATERIALS TECHNOLOGY LTD, Jiangyin City Wuxi, Jiangsu 214445 (CN)
(72) Inventor: WANG, Chenghao, Wuxi, Jiangsu 214445 (CN); LI, Xuefa, Wuxi, Jiangsu 214445 (CN); ZHANG, Guoping, Wuxi, Jiangsu 214445 (CN)
(74) Representative: Aseglio-Gianinet, Romina
(86) International application number: PCT/CN2022/095406
(87) International publication number: WO 2023/206687

(57) **Abstract**

The present invention relates to a composite current collector and a preparation method therefor, and an electrode plate and a secondary battery. The composite current collector comprises a polymer base membrane, and aluminum-plated layers, which are arranged on the surfaces of two sides of the polymer base membrane, wherein the aluminum-plated layer comprises a first sub-layer and a second sub-layer; the first sub-layer is closer to the polymer base membrane than the second sub-layer; and the particle size of aluminum particles in the first sub-layer is 10 nm to 30 nm, and the particle size of aluminum particles in the second sub-layer is 80 nm to 100 nm. The composite current collector not only has relatively high conductivity, but also has relatively high surface energy; and during a coating process of an active substance, the interface internal resistance between a battery electrode plate and a current collector can be significantly improved, thereby improving the capacity and cycling performance of a lithium battery.

## Description

### TECHNICAL FIELD

The present application relates to the field of batteries, and in particular to a composite current collector and a preparation method therefor, an electrode sheet and a secondary battery.

### BACKGROUND

Conventional positive current collectors used in non-aqueous secondary batteries are high-purity aluminum foils, which are produced by a rolling process. In order to guarantee the flatness of the aluminum foils, the roller used in the rolling process has a highly smooth surface, leading to a low surface energy of the current collector. Accordingly, the positive electrode active material cannot be effectively adhered on the current collector when coated, which results in an overly large interface resistance between the active material and the current collector, affecting the battery performance.

### SUMMARY

In this regard, it is necessary to provide a composite current collector which has a high surface energy and contributes a low interface resistance with the active material.

Additionally, it is necessary to provide a preparation method for a composite current collector, and an electrode sheet and a secondary battery including the composite current collector.

A composite current collector is provided, including: a polymer base film and an aluminum coating layer disposed on both sides of the polymer base film, wherein the aluminum coating layer includes a first sub-layer and a second sub-layer, the first sub-layer is closer to the polymer base film than the second sub-layer, wherein aluminum particles in the first sub-layer have a particle size of 10 nm-30 nm, and aluminum particles in the second sub-layer have a particle size of 80 nm-100 nm.

In one embodiment, the aluminum coating layer each independently has a thickness of 0.3 µm-3 µm.

In one embodiment, there are a plurality of first sub-layers, and the plurality of first sub-layers are sequentially stacked between the polymer base film and the second sub-layer.

In one embodiment, the number of the first sub-layers is less than or equal to 19.

In one embodiment, the polymer base film has a thickness of 1 µm-25 µm.

In one embodiment, the polymer base film is selected from at least one of polyethylene, polypropylene, polymethylpentene and polyethylene terephthalate.

A preparation method for a composite current collector is provided, including the following steps: forming an aluminum coating layer on both sides of a polymer base film to prepare a composite current collector; wherein the aluminum coating layer includes a first sub-layer and a second sub-layer, the first sub-layer is closer to the polymer base film than the second sub-layer, wherein aluminum particles in the first sub-layer have a particle size of 10 nm-30 nm, and aluminum particles in the second sub-layer have a particle size of 80 nm-100 nm.

In one embodiment, the aluminum coating layer is formed by vacuum evaporation or magnetron sputtering.

In one embodiment, for the process of forming the aluminum coating layer, process parameters are as follows: an evaporation temperature is more than or equal to 600°C, a vacuum degree is less than 0.01 Pa, a coating rate is more than 10 m/min, and an evaporation temperature for forming the first sub-layer is higher than an evaporation temperature for forming the second sub-layer.

The evaporation temperature for forming the first sub-layer is 700°C-750°C, and the evaporation temperature for forming the second sub-layer is 600°C-700°C.

An electrode sheet includes: a current collector and an active material coated on both sides of the current collector, wherein the current collector is the above-mentioned composite current collector or the composite current collector prepared by the above-mentioned preparation method for a composite current collector.

A secondary battery is provided, including the above-mentioned electrode sheet.

The above-mentioned composite current collector includes a polymer base film and an aluminum coating layer, wherein the polymer base film is used to support the aluminum coating layer, and the aluminum coating layer includes a two-layer structure having different particle sizes. The aluminum particles in the first sub-layer have a small particle size and thus get high compactness, ensuring that the aluminum coating layer has high conductivity. The aluminum particles in the second sub-layer have a large particle size and thus get low compactness, increasing the surface energy of the aluminum coating layer, which can well solve the problem of high interface resistance in conventional aluminum foils. Therefore, by controlling the particle sizes of particles in different sub-layers of aluminum coating layer, the above-mentioned composite current collector can have high surface energy and high conductivity at the same time; for the process of coating active materials, the interfacial internal resistance between the battery sheet and the current collector can be greatly ameliorated, improving the capacity and cycle performance of the lithium battery.

### BRIEF DESCRIPTION OF DRAWINGS

FIG. 1 is a schematic structural diagram of a composite current collector according to an embodiment;
FIG. 2 is a comparison chart showing internal resistances of lithium batteries prepared using composite current collectors according to Example 1 and Comparative Example 1.

### DETAILED DESCRIPTION

To facilitate understanding of the present application, specific embodiments are used below to describe the present application more comprehensively. The specific embodiments contain preferred embodiments of the present application. However, the present application may be carried out in many different forms and is not limited to the embodiments described herein. On the contrary, these embodiments are to provide a thorough understanding of the present disclosure.

Unless otherwise defined, all technical and scientific terms used herein have the same meaning as commonly understood by those skilled in the art to which the present application pertains. The terminology used herein in the description of the present application is intended to describe the specific embodiments only, but not to limit the present application.

In present disclosure, the particle size of the aluminum particles refers to the median particle size.

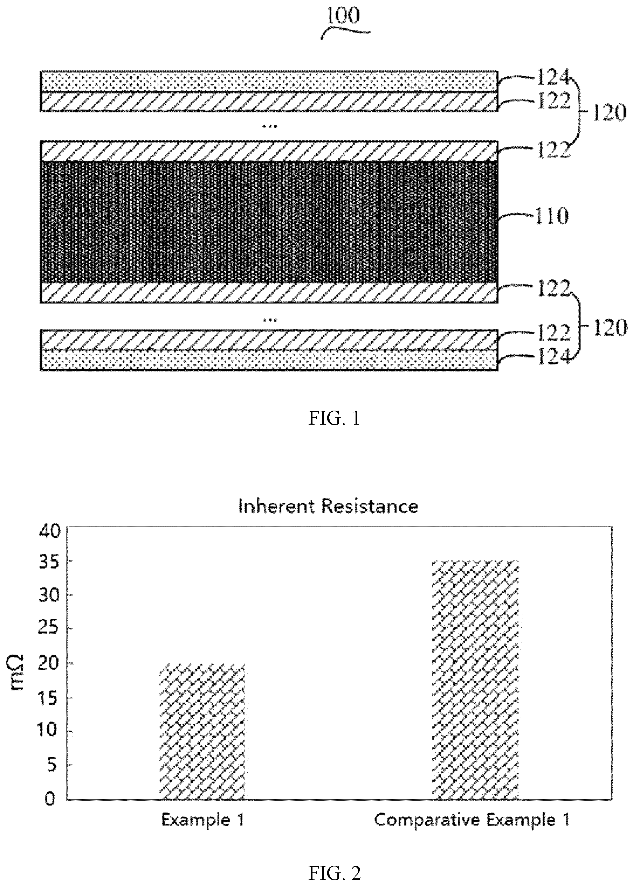

As shown in FIG. 1, one embodiment provides a composite current collector 100, including a polymer base film 110 and an aluminum coating layer 120 disposed on both sides of the polymer base film 110; the aluminum coating layer 120 includes a first sub-layer 122 and a second sub-layer 124, the first sub-layer 122 is closer to the polymer base film 110 than the second sub-layer 124, aluminum particles in the first sub-layer 122 have a particle size of 10 nm-30 nm, and aluminum particles in the second sub-layer 124 have a particle size of 80 nm-100 nm.

Specifically, the particle size of the aluminum particles in the first sub-layer 122 is 10 nm, 15 nm, 20 nm, 25 nm, 30 nm, 10 nm-15 nm, 15 nm-20 nm, 10 nm-20 nm, 15 nm-25 nm, 20 nm-25 nm or 25 nm-30 nm, etc. The particle size of the aluminum particles in the second sub-layer 124 is 80 nm, 85 nm, 90 nm, 95 nm, 100 nm, 80 nm-85 nm, 85 nm-90 nm, 90 nm-95 nm, 95 nm-100 nm, 80 nm-90 nm or 85 nm-95 nm.

Further, there are a plurality of first sub-layers 122, and the plurality of first sub-layers 122 are sequentially stacked between the polymer base film 110 and the second sub-layer 124. Furthermore, the number of the first sub-layers 122 is less than or equal to 19. For example, the number of the first sub-layers 122 is 2, 5, 8, 10, 12, 15, 17 or 19. Preferably, the number of the first sub-layers 122 is 8-12.

The aluminum coating layer 120 each independently has a thickness of less than or equal to 5 µm. Furthermore, the aluminum coating layer 120 each independently has a thickness of 0.3 µm-3 µm. For example, the thickness of each aluminum coating layer 120 is independently 0.3 µm, 0.5 µm, 1 µm, 1.5 µm, 2 µm, 2.5 µm, 0.3 µm-0.5 µm, 0.5 µm-1 µm, 1 µm-1.5 µm, 1.5 µm-2 µm, 2 µm-2.5 µm, 2.5 µm-3 µm, 0.3 µm-1 µm, 0.5 µm-1.5 µm, 1 µm-2 µm, 1.5 µm-2.5 µm, 2 µm-3 µm, etc. Furthermore, the aluminum coating layer 120 is symmetrically disposed on both sides of the polymer base film 110.

The aluminum particles in the first sub-layer 122 have a small particle size and thus get high compactness, ensuring that the aluminum coating layer 120 has high conductivity. The aluminum particles in the second sub-layer 124 have a large particle size and thus get low compactness, increasing the outmost surface energy of the aluminum coating layer 120, which solves the problem of high interface resistance in conventional aluminum foils.

Furthermore, the aluminum coating layer 120 has a purity of more than or equal to 99.8%.

Specifically, the polymer base film 110 has a thickness of 1 µm-25 µm. For example, the thickness of the polymer base film 110 is 1 µm, 5 µm, 10 µm, 15 µm, 20 µm, 25 µm, 1 µm-10 µm, 5 µm-15 µm, 10 µm-20 µm, 1 µm-5 µm, 5 µm-10 µm, 10 µm-15 µm, 15 µm-20 µm, 20 µm-25 µm, etc.

Specifically, the polymer base film 110 is selected from at least one of polyethylene, polypropylene, polymethylpentene and polyethylene terephthalate. The polymer base film 110 has a low density, which can further reduce the density of the composite current collector 100 and increase the energy density of the lithium-ion battery.

In one embodiment, the peel strength between the aluminum coating layer 120 and the polymer base film 110 is more than or equal to 2 N/m.

Specifically, the composite current collector 100 has a thickness of 3 µm-30 µm. For example, the thickness of the composite current collector 100 is 3 µm, 5 µm, 10 µm, 15 µm, 20 µm, 25 µm, 30 µm, 3 µm-5 µm, 5 µm-10 µm, 10 µm-15 µm, 15 µm-20 µm, 25 µm-30 µm, 3 µm-10 µm, 5 µm-15 µm, 10 µm-20 µm, 15 µm-25 µm or 20 µm-30 µm, etc. Preferably, the composite current collector 100 has a thickness of 3 µm-16 µm.

Further, in this embodiment, the composite current collector 100 is a positive current collector.

The conventional positive current collector is aluminum foils, which are produced by rolling process. The specific steps are as follows.
a. Molten electrolytic aluminum is sent to a smelting furnace, and added with aluminum ingots which are 20%-40% of the total weight of the molten electrolytic aluminum; the melt temperature is controlled at 750°C-780°C, and the mass percentage of each element in the melt is adjusted to Si of 0.1%-0.15%, Fe of 0.45%-0.5%, Cu of 0.1%-0.15%, Mn of 1.1%-1.2%, Ti of 0.02%-0.04%, and a remainder of Al. A refining agent is sprayed with pure nitrogen or pure argon into the melt for refining; with being stirred thoroughly and uniformly, the melt is refined for 8-10 minutes, and then allowed to stand for 15-25 minutes; the molten aluminum was separated from the scum floating on the surface, and poured into a holding furnace; the temperature inside the holding furnace is controlled at 750°C-760°C. The molten aluminum in the holding furnace is sent to a launder, subjected to grain refinement by aluminum titanium boron wires against the current, and then degassed with pure nitrogen or pure argon in a degassing box; after degassing, the molten aluminum is filtered and purified with a foam ceramic filter. The purified molten aluminum is sent to a casting and rolling machine for casting and rolling; a blank with a thickness of 5.0-10.0 mm is produced by casting and rolling.
b. The blank obtained in step a is cold-rolled to a thickness of 3.0-5.0 mm and then subjected to homogenization annealing, wherein the homogenization annealing is performed at a temperature of 440°C-490°C for a period of 20-30 hours.
c. The homogenization-annealed blank is cold-rolled to a thickness of 0.2-0.6 mm, and then subjected to recrystallization annealing, wherein the recrystallization annealing is performed at a temperature of 270°C -330°C for a period of 12-19 hours.
d. The recrystallization-annealed blank is cold-rolled to an anode aluminum foil with a desired thickness.

The surface energy of the current collector prepared by the above conventional method is low, and thereby the active material cannot effectively adhered to the current collector when coated on the current collector, leading to an overly large interface resistance between the active material and the current collector, and affecting battery performance.

The composite current collector of this embodiment includes a polymer base film and an aluminum coating layer. The polymer base film is used to support the aluminum coating layer. The aluminum coating layer includes a two-layer structure having different particle sizes. The aluminum particles in the first sub-layer have a small particle size and thus get high compactness, ensuring that the aluminum coating layer has high conductivity. The aluminum particles in the second sub-layer have a large particle size and thus get low compactness, increasing the outmost surface energy of the aluminum coating layer, which solves the problem of high interface resistance in conventional aluminum foils. Therefore, the above-mentioned composite current collector can have high conductivity and high surface energy at the same time; for the process of coating active materials, the interfacial internal resistance between the battery sheet and the current collector can be greatly ameliorated, improving the capacity and cycle performance of the lithium battery.

Additionally, limited by the conventional rolling process, thin aluminum foils are very difficult to produce. However, in this embodiment, by combining the polymer base film with the aluminum coating layer, the composite current collector can realize a relative small thickness.

Specifically, in this embodiment, the surface energy of the surface layer of the composite current collector is more than 65 dynes/cm, and the electrical conductivity of one-side aluminum coating layer is more than or equal to 3.7×10⁶ S/M. For the composite current collector, the puncture strength is more than or equal to 50 gf, the tensile strength MD is more than or equal to 150 MPa, the tensile strength TD is more than or equal to 150 MPa, the elongation MD is more than or equal to 10%, and the elongation TD is more than or equal to 10%. Therefore, besides high electrical conductivity and improved surface energy, the above-mentioned composite current collector also has good strength and elongation, which can supersede the conventional aluminum foil to be used in batteries.

A preparation method for a composite current collector according to one embodiment includes the following steps:
an aluminum coating layer is formed on both sides of a polymer base film to prepare a composite current collector.

In the preparation method, the aluminum coating layer includes a first sub-layer and a second sub-layer, the first sub-layer is closer to the polymer base film than the second sub-layer, wherein aluminum particles in the first sub-layer have a particle size of 10 nm-30 nm, and aluminum particles in the second sub-layer have a particle size of 80 nm-100 nm.

Specifically, the aluminum coating layer is formed by vacuum evaporation or magnetron sputtering. Further, the aluminum coating layer is formed using high-purity aluminum ingots (the purity is more than or equal to 99.8%) as a raw material.

In one embodiment, for the process of forming the aluminum coating layer, process parameters are as follows: an evaporation temperature is more than or equal to 600°C, a vacuum degree is less than 0.01 Pa, and a coating rate is more than 10 m/min. Further, the vacuum degree is 0.002 Pa-0.005 Pa, and the coating rate is 80 m/min-120 m/min.

Further, an evaporation temperature for forming the first sub-layer is higher than an evaporation temperature for forming the second sub-layer. The particle sizes of aluminum particles in the first sub-layer and the second sub-layer are controlled by controlling the temperature during the formation of the first sub-layer and the second sub-layer. Further, the evaporation temperature for forming the first sub-layer is 700°C to 750°C, and the evaporation temperature for forming the second sub-layer is 600°C to 700°C.

In some embodiments, there are a plurality of first sub-layers, and the plurality of first sub-layers are sequentially stacked between the polymer base film and the second sub-layer. Furthermore, the number of the first sub-layers is less than or equal to 19. For example, the number of the first sub-layers is 2, 5, 8, 10, 12, 15, 17 or 19. Preferably, the number of the first sub-layers is 8-12.

Specifically, the aluminum coating layer each independently has a thickness of less than or equal to 5 µm. Further, the aluminum coating layer each independently has a thickness of 0.3 µm-3 µm. For example, the thickness of each aluminum coating layer is independently 0.3 µm, 0.5 µm, 1 µm, 1.5 µm, 2 µm, 2.5 µm, 0.3 µm-0.5 µm, 0.5 µm-1 µm, 1 µm-1.5 µm, 1.5 µm-2 µm, 2 µm-2.5 µm, 2.5 µm-3 µm, 0.3 µm-1 µm, 0.5 µm-1.5 µm, 1 µm-2 µm, 1.5 µm-2.5 µm, 2 µm-3 µm, etc. Furthermore, the aluminum coating layer is symmetrically disposed on both sides of the polymer base film 110.

Specifically, the polymer base film has a thickness of 1 µm-25 µm. For example, the thickness of the polymer base film is 1 µm, 5 µm, 10 µm, 15 µm, 20 µm, 25 µm, 1 µm-10 µm, 5 µm-15 µm, 10 µm-20 µm, 1 µm-5 µm, 5 µm- 10 µm, 10 µm-15 µm, 15 µm-20 µm, 20 µm -25 µm, etc.

Specifically, the polymer base film is selected from at least one of polyethylene, polypropylene, polymethylpentene and polyethylene terephthalate. The above polymer base film has a low density, which can further reduce the density of the composite current collector 100 and increase the energy density of the lithium-ion battery.

In one embodiment, the peel strength between the aluminum coating layer and the polymer base film is more than or equal to 2 N/m.

Specifically, the composite current collector has a thickness of 3 µm-30 µm. For example, the thickness of the composite current collector is 3 µm, 5 µm, 10 µm, 15 µm, 20 µm, 25 µm, 30 µm, 3 µm-5 µm, 5 µm-10 µm, 10 µm-15 µm, 15 µm-20 µm, 25 µm-30 µm, 3 µm-10 µm, 5 µm-15 µm, 10 µm-20 µm, 15 µm-25 µm, or 20 µm-30 µm, etc. Preferably, the composite current collector has a thickness of 3 µm-16 µm.

Furthermore, in this embodiment, the composite current collector is a positive current collector.

Furthermore, the polymer base film is unwound under an unwinding tension of 5 N-30 N. After the aluminum coating layer is formed, a step of winding is also included. The winding is performed under a tension of 5 N-25 N.

The preparation method of the composite current collector has a facile process, and through multiple evaporation, the aluminum coating layer contains a two-layer structure having different particle sizes. The aluminum particles in the first sub-layer have a small particle size and thus get high compactness, ensuring that the aluminum coating layer has high conductivity. The aluminum particles in the second sub-layer have a large particle size and thus get low compactness, increasing the surface energy of the aluminum coating layer, which solves the problem of high interface resistance in conventional aluminum foils. Therefore, the composite current collector prepared by the above-mentioned method can have high conductivity and high surface energy at the same time; for the process of coating active materials, the interfacial internal resistance between the battery sheet and the current collector can be greatly ameliorated, improving the capacity and cycle performance of the lithium battery.

An electrode sheet in one embodiment includes a current collector and an active material coated on both sides of the current collector. The current collector is the composite current collector in the above embodiments. Further, the electrode sheet is a positive electrode sheet. The active material may be an active material commonly used in positive electrodes in the art, which will not be described in details herein.

A secondary battery according to one embodiment includes the above-mentioned electrode sheet. Specifically, the electrode sheet is a positive electrode sheet. The secondary battery further includes a negative electrode sheet, a separator and an electrolyte. Specifically, the negative electrode sheet, separator and electrolyte may be those commonly used in the art, which will not be described in details herein.

In one embodiment, the secondary battery is a non-aqueous secondary battery, such as a lithium battery. The secondary battery in this embodiment has low interfacial internal resistance, high capacity and excellent cycle performance.

Some specific embodiments are described below.

### Example 1

This example provides a composite current collector with a thickness of 8 microns, including a polymer base film PET with a thickness of 6 microns and an aluminum coating layer symmetrically disposed on both sides of the polymer base film. The aluminum coating layer on one side has a thickness of 1 micron. The preparation process is as follows.
(1) A polymer base film PET with a thickness of 6 microns and a high-purity aluminum ingot with a purity of 99.9% were selected.
(2) The polymer base film and high-purity aluminum ingot were separately put on a vacuum evaporation device.
(3) Aluminum from the high-purity aluminum ingot was deposited onto the upper and lower surfaces of the polymer base film through the vacuum evaporation device, so as to obtain the aluminum coating layer. The polymer base film was unwound under a tension of 8 N. The aluminum coating layer on one side required evaporation deposition by 16 times, of which the first 15 evaporation deposition gave 15 first sub-layers, aluminum particles in each first sub-layer having a particle size of 20 nm, and the 16th evaporation deposition gave a second sub-layer, aluminum particles in the second sub-layer having a particle size of 85 nm. Process parameters for the evaporation process are as follows: a vacuum degree was 5×10⁻² Pa, and an evaporation rate was 50 m/min; an evaporation temperature for the first 15 times was 700°C, and an evaporation temperature for the 16th time was 620°C.
(4) After the evaporation deposition was completed, winding operation was performed under a winding tension of 6 N to obtain the composite current collector of this example.

### Example 2

This example provides a composite current collector with a thickness of 8 microns, including a polymer base film PET with a thickness of 6 microns and an aluminum coating layer symmetrically disposed on both sides of the polymer base film. The aluminum coating layer on one side has a thickness of 1 micron. The preparation process is as follows.
(1) A polymer base film PET with a thickness of 6 microns and a high-purity aluminum ingot with a purity of 99.9% were selected.
(2) The polymer base film and high-purity aluminum ingot were separately put on a vacuum evaporation device.
(3) Aluminum from the high-purity aluminum ingot was deposited onto the upper and lower surfaces of the polymer base film through the vacuum evaporation device, so as to obtain the aluminum coating layer. The polymer base film was unwound under a tension of 8 N. The aluminum coating layer on one side required evaporation deposition by 2 times, of which the first evaporation deposition gave a first sub-layer, aluminum particles in the first sub-layer having a particle size of 20 nm, and the second evaporation deposition gave a second sub-layer, aluminum particles in the second sub-layer having a particle size of 85 nm. Process parameters for the evaporation process are as follows: a vacuum degree was 5×10⁻² Pa, and an evaporation rate was 50 m/min; an evaporation temperature for the first time was 700°C, and an evaporation temperature for the second time was 620°C.
(4) After the evaporation deposition was completed, winding operation was performed under a winding tension of 6 N to obtain the composite current collector of this example.

### Example 3

This example provides a composite current collector with a thickness of 8 microns, including a polymer base film PET with a thickness of 6 microns and an aluminum coating layer symmetrically disposed on both sides of the polymer base film. The aluminum coating layer on one side has a thickness of 1 micron. The preparation process is as follows.
(1) A polymer base film PET with a thickness of 6 microns and a high-purity aluminum ingot with a purity of 99.9% were selected.
(2) The polymer base film and high-purity aluminum ingot were separately put on a vacuum evaporation device.
(3) Aluminum from the high-purity aluminum ingot was deposited onto the upper and lower surfaces of the polymer base film through the vacuum evaporation device, so as to obtain the aluminum coating layer. The polymer base film was unwound under a tension of 8 N. The aluminum coating layer on one side required evaporation deposition by 16 times, of which the first 15 evaporation deposition gave 15 first sub-layers, aluminum particles in each first sub-layer having a particle size of 10 nm, and the 16th evaporation deposition gave a second sub-layer, aluminum particles in the second sub-layer having a particle size of 100 nm. Process parameters for the evaporation process are as follows: a vacuum degree was 5×10⁻² Pa, and an evaporation rate was 50 m/min; an evaporation temperature for the first 15 times was 740°C, and an evaporation temperature for the 16th time was 650°C.
(4) After the evaporation deposition was completed, winding operation was performed under a winding tension of 6 N to obtain the composite current collector of this example.

### Comparative Example 1

Comparative Example 1 provides a conventional aluminum foil positive current collector prepared with a thickness of 8 microns. The preparation process is as follows.
(1) Molten electrolytic aluminum was sent to a smelting furnace, and added with aluminum ingots which were 30% of the total weight of the molten electrolytic aluminum; the melt temperature was controlled at 770°C, and the mass percentage of each element in the melt was adjusted to Si of 0.15%, Fe of 0.48%, Cu of 0.13%, Mn of 1.3%, Ti of 0.03%, and a remainder of Al; a refining agent was sprayed with pure nitrogen or pure argon into the melt for refining; with being stirred thoroughly and uniformly, the melt was refined for 9 minutes, and then allowed to stand for 20 minutes; the molten aluminum was separated from the scum floating on the surface, and poured into a holding furnace; the temperature inside the holding furnace was controlled at 755°C; the molten aluminum in the holding furnace was sent to a launder, subjected to grain refinement by aluminum titanium boron wires against the current, and then degassed with pure nitrogen or pure argon in a degassing box; after degassing, the molten aluminum was filtered and purified with a foam ceramic filter; the purified molten aluminum was sent to a casting and rolling machine for casting and rolling; a blank with a thickness of 4.0 mm was produced by casting and rolling.
(2) The blank obtained in step (1) was cold-rolled to a thickness of 4.0 mm and then subjected to homogenization annealing, wherein the homogenization annealing was performed at a temperature of 470°C for a period of 25 hours.
(3) The homogenization-annealed blank was cold-rolled to a thickness of 0.5 mm, and then subjected to recrystallization annealing, wherein the recrystallization annealing was performed at a temperature of 300°C for a period of 15 hours.
(4) The recrystallization-annealed blank was cold-rolled to an 8-micron aluminum foil, so as to obtain the current collector of Comparative Example 1.

### Comparative Example 2

Comparative Example 2 provides a composite current collector with a thickness of 8 microns, including a polymer base film PET with a thickness of 6 microns and an aluminum coating layer symmetrically disposed on both sides of the polymer base film. The aluminum coating layer on one side has a thickness of 1 micron. The preparation process is as follows.
(1) A polymer base film PET with a thickness of 6 microns and a high-purity aluminum ingot with a purity of 99.9% were selected.
(2) The polymer base film and high-purity aluminum ingot were separately put on a vacuum evaporation device.
(3) Aluminum from the high-purity aluminum ingot was deposited onto the upper and lower surfaces of the polymer base film through the vacuum evaporation device, so as to obtain the aluminum coating layer. The polymer base film was unwound under a tension of 8 N. The aluminum coating layer on one side required evaporation deposition by 16 times, each of which gave a layer; aluminum particles in each layer had a particle size of 20 nm. Process parameters for the evaporation process are as follows: an evaporation temperature was 700°C, a vacuum degree was 5×10⁻² Pa, and an evaporation rate was 50 m/min.
(4) After the evaporation deposition was completed, winding operation was performed under a winding tension of 6 N to obtain the composite current collector of Comparative Example 2.

### Comparative Example 3

Comparative Example 3 provides a composite current collector with a thickness of 8 microns, including a polymer base film PP with a thickness of 6 microns and an aluminum coating layer symmetrically disposed on both sides of the polymer base film. The aluminum coating layer on one side has a thickness of 1 micron. The preparation process is as follows.
(1) A polymer base film PET with a thickness of 6 microns and a high-purity aluminum ingot with a purity of 99.9% were selected.
(2) The polymer base film and high-purity aluminum ingot were separately put on a vacuum evaporation device.
(3) Aluminum from the high-purity aluminum ingot was deposited onto the upper and lower surfaces of the polymer base film through the vacuum evaporation device, so as to obtain the aluminum coating layer. The polymer base film was unwound under a tension of 8 N. The aluminum coating layer on one side required evaporation deposition by 16 times, each of which gave a layer; aluminum particles in each layer had a particle size of 85 nm. Process parameters for the evaporation process are as follows: an evaporation temperature was 620°C, a vacuum degree was 5×10⁻² Pa, and an evaporation rate was 50 m/min.
(4) After the evaporation deposition was completed, winding operation was performed under a winding tension of 6 N to obtain the composite current collector of Comparative Example 3.

### Comparative Example 4

Comparative Example 4 provides a composite current collector with a thickness of 8 microns, including a polymer base film PET with a thickness of 6 microns and an aluminum coating layer symmetrically disposed on both sides of the polymer base film. The aluminum coating layer on one side has a thickness of 1 micron. The preparation process is as follows.
(1) A polymer base film PET with a thickness of 6 microns and a high-purity aluminum ingot with a purity of 99.9% were selected.
(2) The polymer base film and high-purity aluminum ingot were separately put on a vacuum evaporation device.
(3) Aluminum from the high-purity aluminum ingot was deposited onto the upper and lower surfaces of the polymer base film through the vacuum evaporation device, so as to obtain the aluminum coating layer. The polymer base film was unwound under a tension of 8 N. The aluminum coating layer on one side required evaporation deposition by 16 times, of which the first 15 evaporation deposition gave 15 first sub-layers, aluminum particles in each first sub-layer having a particle size of 85 nm, and the 16th evaporation deposition gave a second sub-layer, aluminum particles in the second sub-layer having a particle size of 20 nm. Process parameters for the evaporation process are as follows: a vacuum degree was 5×10⁻² Pa, and an evaporation rate was 50 m/min; an evaporation temperature for the first 15 times was 620°C, and an evaporation temperature for the 16th time was 700°C.
(4) After the evaporation deposition was completed, winding operation was performed under a winding tension of 6 N to obtain the composite current collector of Comparative Example 4.

### Comparative Example 5

Comparative Example 5 provides a composite current collector with a thickness of 8 microns, including a polymer base film PET with a thickness of 6 microns and an aluminum coating layer symmetrically disposed on both sides of the polymer base film. The aluminum coating layer on one side has a thickness of 1 micron. The preparation process is as follows.
(1) A polymer base film PET with a thickness of 6 microns and a high-purity aluminum ingot with a purity of 99.9% were selected.
(2) The polymer base film and high-purity aluminum ingot were separately put on a vacuum evaporation device.
(3) Aluminum from the high-purity aluminum ingot was deposited onto the upper and lower surfaces of the polymer base film through the vacuum evaporation device, so as to obtain the aluminum coating layer. The polymer base film was unwound under a tension of 8 N. The aluminum coating layer on one side required evaporation deposition by 16 times, of which the first 15 evaporation deposition gave 15 first sub-layers, aluminum particles in each first sub-layer having a particle size of 50 nm, and the 16th evaporation deposition gave a second sub-layer, aluminum particles in the second sub-layer having a particle size of 85 nm. Process parameters for the evaporation process are as follows: a vacuum degree was 5×10⁻² Pa, and an evaporation rate was 50 m/min; an evaporation temperature for the first 15 times was 720°C, and an evaporation temperature for the 16th time was 620°C.
(4) After the evaporation deposition was completed, winding operation was performed under a winding tension of 6 N to obtain the composite current collector of Comparative Example 5.

### Comparative Example 6

Comparative Example 6 provides a composite current collector with a thickness of 8 microns, including a polymer base film PET with a thickness of 6 microns and an aluminum coating layer symmetrically disposed on both sides of the polymer base film. The aluminum coating layer on one side has a thickness of 1 micron. The preparation process is as follows.
(1) A polymer base film PET with a thickness of 6 microns and a high-purity aluminum ingot with a purity of 99.9% were selected.
(2) The polymer base film and high-purity aluminum ingot were separately put on a vacuum evaporation device.
(3) Aluminum from the high-purity aluminum ingot was deposited onto the upper and lower surfaces of the polymer base film through the vacuum evaporation device, so as to obtain the aluminum coating layer. The polymer base film was unwound under a tension of 8 N. The aluminum coating layer on one side required evaporation deposition by 16 times, of which the first 15 evaporation deposition gave 15 first sub-layers, aluminum particles in each first sub-layer having a particle size of 20 nm, and the 16th evaporation deposition gave a second sub-layer, aluminum particles in the second sub-layer having a particle size of 120 nm. Process parameters for the evaporation process are as follows: a vacuum degree was 5×10⁻² Pa, and an evaporation rate was 50 m/min; an evaporation temperature for the first 15 times was 700°C, and an evaporation temperature for the 16th time was 600°C.
(4) After the evaporation deposition was completed, winding operation was performed under a winding tension of 6 N to obtain the composite current collector of Comparative Example 6.

The composite current collectors obtained in the above examples and comparative examples were tested for their performance, and the test results are shown in Table 1. In the test, a four-probe tester was used to test the electrical conductivity of the aluminum coating layer on one side, and a dyne pen was used to test the surface energy of the aluminum coating layer. The composite current collector was combined with the positive active material to obtain a positive electrode sheet, and then assembled with a negative electrode sheet, electrolyte, and separator to form a lithium battery. The lithium battery (with a capacity of 50 Ah) was tested for the internal resistance and capacity retention after 1000 cycles. The internal resistance results of lithium batteries prepared using the current collectors of Example 1 and Comparative Example 1 are shown in FIG. 2.

**Table 1 Test data of Examples and Comparative Examples**

| Embodiment | Electrical Conductivity (×10⁶ S/M) | Surface energy (dynes/cm) | Capacity Retention (%) | Internal Resistance (mΩ) |
|---|---|---|---|---|
| Example 1 | 3.8 | 70 | 93% | 20 |
| Example 2 | 3.7 | 68 | 91% | 23 |
| Example 3 | 3.8 | 66 | 89% | 22 |
| Comparative Example 1 | 3.9 | 55 | 84% | 35 |
| Comparative Example 2 | 3.7 | 43 | 83% | 33 |
| Comparative Example 3 | 3.6 | 45 | 82% | 32 |
| Comparative Example 4 | 3.7 | 47 | 84% | 35 |
| Comparative Example 5 | 3.5 | 43 | 83% | 33 |
| Comparative Example 6 | 3.7 | 45 | 82% | 36 |

It can be seen from the above experimental data that the composite current collectors of the examples can have high conductivity and improved surface energy at the same time, thereby improving the capacity retention of the battery and reducing the internal resistance.

The technical features of the above-described embodiments can be combined in any way. To simplify the description, the possible combinations of technical features in the embodiments will not be described exhaustedly. However, as long as there is no contradiction, all the combinations of these technical features should be regarded as falling within the scope of disclosure of this specification.

The embodiments are just several implementation modes of the present application, used to facilitate understanding of the technical solutions of the present application in details, but they should not be construed as limiting the scope of protection of the present application. It should be noted that, for those of ordinary skill in the art, several modifications and improvements can be made without departing from the concept of the present application, which all belong to the protection scope of the present application. It should be understood that technical solutions obtained by those of ordinary skill in the art through logical analysis, reasoning or a finite number of experiments based on the technical solutions provided by the present application shall fall within the protection scope of the appended claims of the present application. Therefore, the protection scope of the present application shall be defined by the appended claims, and the description and drawings may be used to interpret the contents of the claims.

## Claims

1. A composite current collector, comprising a polymer base film and an aluminum coating layer disposed on both sides of the polymer base film, wherein the aluminum coating layer comprises a first sub-layer and a second sub-layer, the first sub-layer is closer to the polymer base film than the second sub-layer, aluminum particles in the first sub-layer have a particle size of 10 nm-30 nm, and aluminum particles in the second sub-layer have a particle size of 80 nm-100 nm.

2. The composite current collector according to claim 1, wherein the aluminum coating layer each independently has a thickness of 0.3 µm-3 µm.

3. The composite current collector according to claim 1, wherein there are a plurality of first sub-layers, and the plurality of first sub-layers are sequentially stacked between the polymer base film and the second sub-layer.

4. The composite current collector according to claim 3, wherein the number of the first sub-layers is less than or equal to 19.

5. The composite current collector according to any one of claims 1 to 4, wherein the polymer base film has a thickness of 1 µm-25 µm.

6. The composite current collector according to any one of claims 1 to 4, wherein the polymer base film is selected from at least one of polyethylene, polypropylene, polymethylpentene and polyethylene terephthalate.

7. A preparation method for a composite current collector, comprising the following steps:
forming an aluminum coating layer on both sides of a polymer base film to prepare a composite current collector; wherein the aluminum coating layer comprises a first sub-layer and a second sub-layer, the first sub-layer is closer to the polymer base film than the second sub-layer, aluminum particles in the first sub-layer have a particle size of 10 nm-30 nm, and aluminum particles in the second sub-layer have a particle size of 80 nm-100 nm.

8. The preparation method for a composite current collector according to claim 7, wherein the aluminum coating layer is formed by vacuum evaporation or magnetron sputtering.

9. The preparation method for a composite current collector according to claim 8, wherein for the process of forming the aluminum coating layer, process parameters are as follows: an evaporation temperature is more than or equal to 600°C, a vacuum degree is less than 0.01 Pa, a coating rate is more than 10 m/min, and an evaporation temperature for forming the first sub-layer is higher than an evaporation temperature for forming the second sub-layer.

10. The preparation method for a composite current collector according to claim 9, wherein the evaporation temperature for forming the first sub-layer is 700°C-750°C, and the evaporation temperature for forming the second sub-layer is 600°C-700°C.

11. An electrode sheet, comprising a current collector and an active material coated on both sides of the current collector, wherein the current collector is the composite current collector according to any one of claims 1 to 6 or the composite current collector prepared by the preparation method for a composite current collector according to any one of claims 7 to 10.

12. A secondary battery, comprising the electrode sheet according to claim 11.
